# EUROPEAN PATENT APPLICATION

(11) **EP 4 297 127 A1**
(43) Date of publication of application: **27.12.2023**
(21) Application number: 23180320.6
(22) Date of filing: 20.06.2023
(51) Int. Cl.: H01M 4/24, H01M 4/32, H01M 4/36, H01M 4/38, H01M 4/48, H01M 4/52, H01M 4/62, H01M 10/34

(54) **POSITIVE ELECTRODE FOR ALKALINE SECONDARY BATTERY AND ALKALINE SECONDARY BATTERY HAVING THE SAME**

(30) Priority: 21.06.2022 JP 2022099625
(71) Applicant: FDK Corporation, Tokyo 108-8212 (JP)
(72) Inventor: Tanimoto, Yuya, Tokyo, 108-8212 (JP); Ishida, Jun, Tokyo, 108-8212 (JP); Imoto, Yuzo, Tokyo, 108-8212 (JP); Ehara, Yuki, Tokyo, 108-8212 (JP)
(74) Representative: Epping - Hermann - Fischer

(57) **Abstract**

A positive electrode for an alkaline secondary battery has high discharge capacity in a low temperature environment. The positive electrode included in the alkaline secondary battery has a positive electrode active material including 100 parts by mass of nickel hydroxide, and an additive including yttrium oxide. The nickel hydroxide includes an α-phase single phase.

## Description

### BACKGROUND OF THE INVENTION

### Field of the Invention

The present invention relates to a positive electrode for an alkaline secondary battery and an alkaline secondary battery having the positive electrode.

### Description of the Related Art

A positive electrode active material for alkaline secondary batteries widely used now is β-phase Ni(OH)₂. During battery charge, the active material is oxidized from β-Ni(OH)₂ to nickel oxyhydroxide β-NiOOH. During discharge, the nickel oxyhydroxide β-NiOOH is reduced to the original β-Ni(OH)₂. The oxidation-reduction reaction during the charge and discharge proceeds by one electron reaction (theoretical capacity 289 mAh/g).

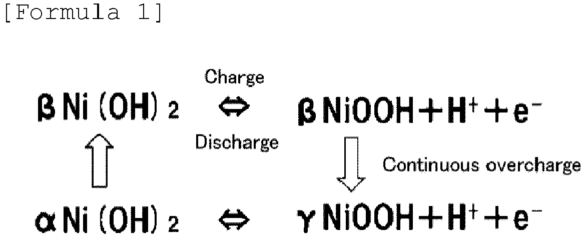

For example, Japanese Patent Application Publication No. 2019-145252 discloses a positive electrode using 1.5 electron reaction of α-Ni(OH)₂, which is α-phase Ni(OH)₂, and γ-NiOOH (theoretical capacity 434 mAh/g) for further increasing the capacity.

In order to achieve the above-mentioned object, the present invention features a positive electrode for an alkaline secondary battery comprising a positive electrode active material including 100 parts by mass of nickel hydroxide, and additive including yttrium oxide, and the nickel hydroxide including α-phase single phase.

### BRIEF DESCRIPTION OF THE DRAWINGS

FIG. 1 is a perspective view showing a nickel-metal hydride battery according to one embodiment in which a part thereof is cut off; and
FIG. 2 is a table showing the relationship among the crystal structure type of the positive electrode active material, the types and the added amounts of additives, and the low temperature characteristics.

### DETAILED DESCRIPTION OF THE INVENTION

A nickel-metal hydride battery will be described as one embodiment of alkaline secondary batteries.

### 1. Configuration of alkaline secondary battery

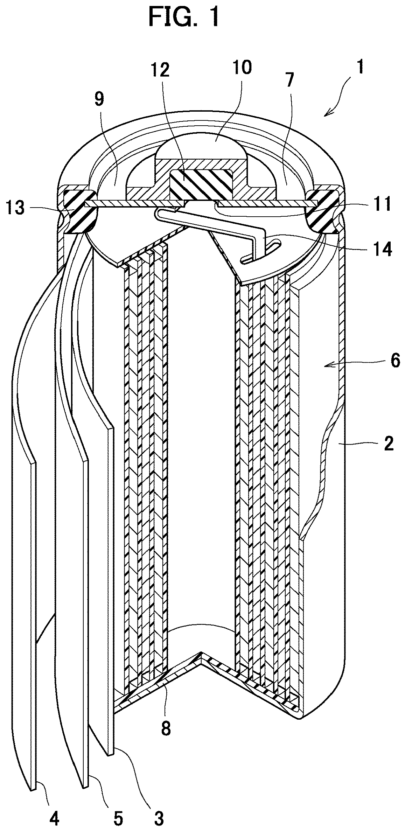

FIG. 1 shows a nickel-metal hydride battery (hereinafter referred to as a "battery") 1 having an AA-sized cylindrical shape. The battery 1 has an electrode group 6 accommodated with an alkali electrolytic solution in an outer can 2. The outer can 2 has a bottomed cylindrical shape with the upper end open, and the upper end is sealed with a sealing member 7. The electrode group 6 includes a belt-shaped positive electrode 3, a belt-shaped negative electrode 4, and a separator 5 positioned between the positive electrode 3 and the negative electrode 4.

In the outer can 2, a bottom wall 8 has electroconductivity, and functions as a negative electrode terminal. The sealing member 7 includes a lid plate 9 and a positive electrode terminal 10. The lid plate 9 has electroconductivity, and has a venting hole 11 at the center thereof. A rubber valve member 12 for closing the venting hole 11 is disposed on the outer surface of the lid plate 9. The lid plate 9 is disposed on the open end of the outer can 2 through a ring-shaped gasket 13. The lid plate 9 is crimped to the open edge of the outer can 2 to close the opening. A terminal functioning as a positive electrode terminal 10 is attached to the lid plate 9.

In the electrode group 6, the positive electrode 3 and the negative electrode 4 are wound in a spiral shape with the separator 5 intervening therebetween to form a substantially cylindrical shape. In other words, the positive electrode 3 and the negative electrode 4 are opposed through the separator 5, and the positive electrode 3 is laid on the negative electrode 4 in the radial direction of the outer can 2.

In the outer can 2, a positive electrode lead wire 14 is disposed between one end of the electrode group 6 and the lid plate 9, and the ends of the positive electrode lead wire 14 are electrically connected to the positive electrode 3 and the lid plate 9, respectively.

The positive electrode 3 has an electroconductive positive electrode core member having a porous structure and a positive electrode mixture applied to the surface and the insides of the pores of the positive electrode core member. In this embodiment, the positive electrode core member is made from a netlike, spongiform, or fibrous metal member plated with nickel, or foamed nickel.

The positive electrode mixture contains positive electrode active material particles, an electroconductive material, a positive electrode additive, and a binder. The positive electrode active material particles are nickel hydroxide (Ni(OH)₂) particles or high-order nickel hydroxide particles. The electroconductive material contains cobalt hydroxide (Co(OH)₂). In this embodiment, the nickel hydroxide particles have a crystal structure of an α-phase single phase. It is preferable that at least one of cobalt, aluminum, yttrium, and manganese is dissolved in the nickel hydroxide particles. Y₂O₃, Nb₂O₅, TiO₂, and Yb₂O₃ are used as the positive electrode additives.

The negative electrode 4 has a belt-shaped electroconductive negative electrode core member, and a negative electrode mixture is applied to the negative electrode core member. The negative electrode core member is a sheet-like metal material with through-holes being distributed, and is formed from an iron punching sheet having the surface plated with nickel. The negative electrode mixture is applied to the negative electrode core member to form a negative electrode mixture layer.

The negative electrode mixture contains particles of a hydrogen storage alloy, a negative electrode additive, an electroconductive material, and a binder.

The hydrogen storage alloy is able to absorb and release hydrogen which is a negative active material. Any type of hydrogen storage alloy can be used as the hydrogen storage alloy. In this embodiment, it is preferable to use a rare earth-Mg-Ni-based hydrogen storage alloy containing a rare earth element, Mg, and Ni.

In this embodiment, the separator 5 is made from a nonwoven fabric including polypropylene fibers subjected to fluoridization treatment or sulfonation treatment.

The electrode group 6 is accommodated in the outer can 2 in the manner that the negative electrode is in contact with the bottom wall 8 of the outer can 2.

Furthermore, a predetermined amount of an alkali electrolytic solution is poured into the outer can 2. The positive electrode 3, the negative electrode 4, and the separator 5 are impregnated with the alkali electrolytic solution, which contributes to electrochemical reaction between the positive electrode 3 and the negative electrode 4, so-called charge and discharge reaction. An alkali electrolytic solution containing NaOH as the main ingredient of the solute is used as the alkali electrolytic solution. Then, the opening of the outer can 2 is sealed.

### 2. Method for manufacturing battery

Hereinafter, a method for manufacturing the above-mentioned battery 1 will be described.

### (1) Manufacturing of positive electrode

Nickel sulfate, aluminium sulfate, and cobalt sulfate are weighed at a predetermined composition, and the weighted nickel sulfate, aluminium sulfate, and cobalt sulfate are added to a 1 mol/L aqueous sulfuric acid solution to provide a mixed aqueous solution. A 10 mol/L aqueous sodium hydroxide solution is gradually added to this mixed aqueous solution with stirring, and the pH of the aqueous solution during the reaction is stabilized at 13 to 14 to form nickel hydroxide particles in which Al and Co are dissolved. The nickel hydroxide particles in which Al and Co are dissolved is obtained as the positive electrode active material.

When electroconductive layers are formed on the surfaces of the nickel hydroxide particles, the process indicated below can be performed.

First, the nickel hydroxide particles obtained as described above are put into an aqueous ammonia solution, and then an aqueous cobalt sulfate solution is added to the aqueous solution. The nickel hydroxide particles function as nuclei, and cobalt hydroxide deposits on the surfaces of these nuclei, so that an active material including electroconductive layers of cobalt hydroxide is formed.

An X-ray diffraction (XRD) analysis was performed to the obtained nickel hydroxide. The powder XRD device (MiniFlex600 manufactured by Rigaku Corporation) was used for the analysis. The analysis conditions are: X-ray source: CuKα, tube voltage: 40 keV, tube current: 15 mA, scan speed: 5 degrees/minute, and step width: 0.02 degrees. It is identified from the profile of this analysis result that nickel hydroxide has a crystal structure of an α-phase single phase.

3.5 parts by mass of cobalt hydroxide, 0.2 parts by mass of hydroxypropyl cellulose (HPC) and some dry Y₂O₃ as an additive are added to 100 parts by mass of the above-mentioned positive electrode active material particles, and mixed. Furthermore, at least one of Nb₂O₅, TiO₂, and Yb₂O₃ as a second additive in addition to Y₂O₃ can be added and mixed. Then, 30 parts by mass of water and 0.3 parts by mass of PTFE are added to provide positive electrode active material slurry. A tape-shaped positive electrode core member made from foamed nickel is filled with the positive electrode active material slurry and then dried. After the slurry is dried, the positive electrode core member is rolled and cut to form the positive electrode 3 for an AA size battery.

### (2) Manufacturing of negative electrode

First, a rare earth component containing 30% by mass of lanthanum (La) and 70% by mass of samarium (Sm) is prepared. The obtained rare earth component, Mg, Ni, and Al are weighed so that the molar ratio of the rare earth component to Mg to Ni to Al is 0.90:0.10:3.33: 0.17, and mixed together to provide a mixture. This mixture is molten in an induction melting furnace. When the molten metal thereof is poured into a mold and then cooled to a room temperature, an ingot of a hydrogen storage alloy is formed. When the composition of a sample collected from the ingot was analyzed by inductively coupled plasma spectroscopy (ICP), the composition of the hydrogen storage alloy was La_{0.30} Sm_{0.70} Mg_{0.10} Ni_{3.33} Al_{0.17}.

The above-mentioned ingot of the hydrogen storage alloy is heat-treated in an argon gas atmosphere at a temperature of 1000°C for 10 hours. After the heat treatment, the ingot cooled to room temperature was mechanically pulverized in an argon gas atmosphere to obtain a hydrogen storage alloy powder including hydrogen storage alloy particles. When the particle diameter of the hydrogen storage alloy particles was measured using a laser diffraction/scattering particle diameter distribution measuring apparatus, the volume average particle diameter (mean volume diameter) of the hydrogen storage alloy particles was 60 um.

0.4 parts by mass of sodium polyacrylate, 0.1 parts by mass of carboxymethyl cellulose, 1.0 part by mass of a dispersion of styrene-butadiene rubber (SBR), 1.0 part by mass of carbon black, and 30 parts by mass of water are added to 100 parts by mass of the hydrogen storage alloy powder, and then mixed together to provide a paste of a negative electrode mixture. The paste is applied to both side surfaces of a tape-shaped iron perforated plate to make each of the thicknesses uniform. The perforated plate has a thickness of 60 um, and the surface thereof is plated with nickel.

After the paste is dried, the perforated plate is rolled to increase the amount of the alloy per unit volume of the negative electrode mixture. Then, the perforated plate is cut to a predetermined size to form the negative electrode 4 for the AA size.

### (3) Assembly of battery

The positive electrode 3 is laid on the negative electrode 4 in order that the longitudinal directions thereof are aligned. Further, the separator 5 is placed between the two electrodes, and the two electrodes and the separator 5 are then wound in a spiral shape to form the electrode group 6. In this embodiment, the separator 5 is formed of a nonwoven fabric made of polypropylene fiber subjected to sulfonation treatment, and has a thickness of 0.1 mm (coating weight: 53 g/m²).

The alkali electrolytic solution is an aqueous solution containing KOH, NaOH, and LiOH. In this embodiment, the alkali electrolytic solution contains KOH, NaOH, and LiOH so that the ratio of KOH to NaOH to LiOH is 0.8: 7.0: 0.02.

Then, the electrode group 6 is accommodated in the outer can 2, and a predetermined amount of the alkali electrolytic solution is poured therein. Then, the opening of the outer can 2 is closed with the sealing member 7 to assemble the nickel-metal hydride battery 1. The nickel-metal hydride battery 1 has the AA size, and has a nominal capacity of 2000 mAh. The nominal capacity of the battery 1 is an electric capacity which has been discharged when the battery is charged at an environmental temperature 25°C at 0.2 It for 16 hours and then discharged at 0.4 It until the battery voltage is lowered to 1.0 V.

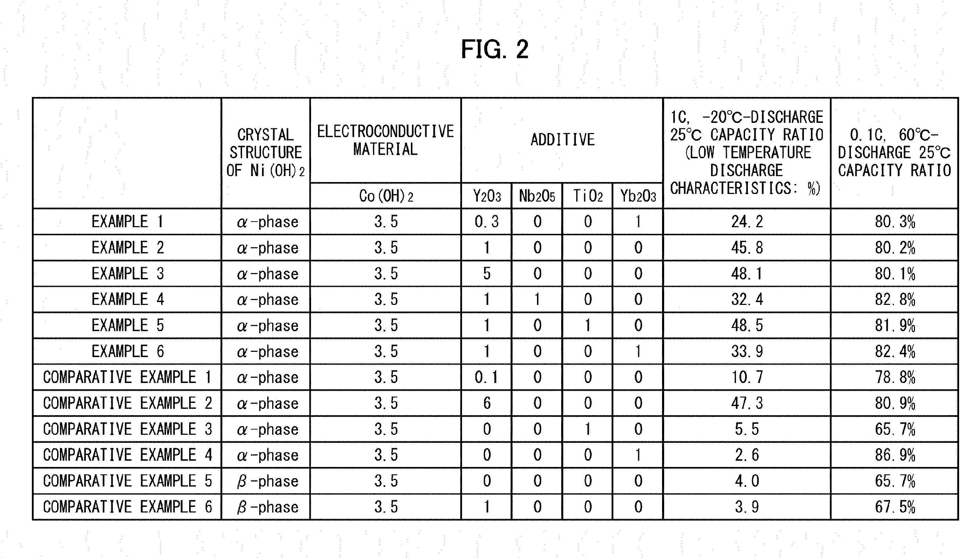

In order to inspect the discharge characteristics of the nickel-metal hydride battery having the above-mentioned configuration, the added amount of Y₂O₃ as an additive with respect to 100 parts by mass of nickel hydroxide including an α-phase single phase as a positive electrode active material is changed to form the batteries 1, as shown in FIG. 2. The batteries including the following amount of additive are made as Examples 1 to 6, respectively.
Example 1: 0.3 parts by mass of the additive (Y₂O₃)
Example 2: 1 part by mass of the additive (Y₂O₃)
Example 3: 5 parts by mass of the additive (Y₂O₃)

The battery of Example 1 includes 0.3 parts by mass of (Y₂O₃), so that the total amount of the additive is small. Therefore, the battery of Example 1 includes 1 part by mass of Yb₂O₃ as another additive.

Batteries 1 are manufactured in which different types of additives are added to 100 parts by mass of nickel hydroxide including an α-phase single phase as a positive electrode active material in addition to 1 part by mass of Y₂O₃ as an additive.
Example 4: 1 part by mass of the additive (Nb₂O₅) and 1 part by mass of the additive (Y₂O₃)
Example 5: 1 part by mass of the additive (TiO₂) and 1 part by mass of the additive (Y₂O₃)
Example 6: 1 part by mass of the additive (Yb₂O₃) and 1 part by mass of the additive (Y₂O₃)

The following batteries 1 are manufactured as Comparative Examples 1 to 6, compared with the above-mentioned Examples.
Comparative Example 1: Ni(OH)₂ of an α-phase single phase as the positive electrode active material, and 0.1 parts by mass of the additive (Y₂O₃)
Comparative Example 2: Ni(OH)₂ of an α-phase single phase as the positive electrode active material, and 6 parts by mass of the additive (Y₂O₃)
Comparative Example 3: Ni(OH)₂ of an α-phase single phase as the positive electrode active material, and 1 part by mass of the additive (TiO₂)
Comparative Example 4: Ni(OH)₂ of an α-phase single phase as the positive electrode active material, and 1 part by mass of the additive (Yb₂O₃)
Comparative Example 5: Ni(OH)₂ of a β-phase as the positive electrode active material, and no additives
Comparative Example 6: Ni(OH)₂ of a β-phase single phase as the positive electrode active material, and 1 part by mass of the additive (Y₂O₃)

### (4) Initial activation process

One cycle of charge and discharge is defined in which the battery 1 is charged at a temperature of 25°C at 0.2 It for 16 hours and then discharged at 0.4 It until the battery voltage lowers to 1.0 V. Initial activation process is performed by repeating the charge and discharge cycle 5 times, which enables the battery 1 to be usable.

### 3. Evaluation of battery characteristics

The initially activated battery 1 is charged at a temperature of 25°C at 1.0 It of charging current for 1 hour and then discharged at a temperature of 25°C at 1.0 It of discharging current. When the battery is discharged until the battery voltage lowers to 1.0 V (discharge stop voltage), the discharge capacity of the battery is measured. The measured discharge capacity at this case is defined as a 25°C charge/25°C discharge capacity and used as a standard for evaluating the battery characteristics.

Then, the battery 1 is charged at a temperature of 25°C at 1.0 It of charging current for 1 hour and then discharged at a temperature of -20°C at 1.0 It of discharging current. The discharge capacity of the battery 1 is measured until the battery voltage lowers to a discharge stop voltage of 1.0 V. This discharge capacity is defined as a 25°C charge/-20°C discharge capacity.

Meanwhile, the battery 1 is charged in a temperature of 60°C at 1.0 It of charging current for 16 hours and then discharged in a temperature of 25°C at 0.2 It of discharging current. The discharge capacity of the battery 1 is measured until the battery voltage of the discharged battery 1 decreases to 1.0 V that is a discharge stop voltage. This discharge capacity is defined as a 60°C charge/25°C discharge capacity.

FIG. 2 shows a table showing values obtained by calculating the ratios of the measured 25°C charge/-20°C discharge capacities to the 25°C charge/25°C discharge capacities, and the ratios of 60°C charge/25°C discharge capacities to the 25°C charge/25°C discharge capacities for each of the batteries.

In the present disclosure, the ratio of 25°C charge/-20°C discharge capacity to the 25°C charge/25°C discharge capacity is referred to as "low temperature discharge characteristics". If this value is large, the large value means that the discharge capacity in the low temperature environment is large, and indicates that low temperature discharge characteristics is high. Meanwhile, if the ratio is small, the small ratio means that the discharge capacity in the low temperature environment is small, and indicates that the low temperature discharge characteristics is low.

For each of the batteries, the ratio of 60°C charge/25°C discharge capacity to the 25°C charge/25°C discharge capacity is referred to as "high temperature charge characteristics". If this value is large, the large value means that the charge capacity in the high temperature is large, and indicates that high temperature charge characteristics is good. Meanwhile, if the ratio is small, the small ratio means that the charge capacity at a high temperature is small, and indicates that the high temperature charge characteristics is small.

The low temperature discharge characteristics when 1 part by mass of Y₂O₃ is used as the additive is 45.8% in the battery of Example 2 including the α-phase single phase. The low temperature discharge characteristics is 3.9% in the battery of Comparative Example 6 including the β-phase. Thus, it is found that even though the same amounts of Y₂O₃ is contained as the additive, the battery including nickel hydroxide of α-phase as the positive electrode active material has 10 times or more the discharge capacity at low temperature of the battery including nickel hydroxide of the β-phase.

When nickel hydroxide including the β-phase is used as the positive electrode active material and Y₂O₃ is added (Comparative Example 6), the low temperature discharge characteristics is not improved unlike the battery of Example 2 formed from the positive electrode mixture in which the same amount of Y₂O₃ is added to nickel hydroxide of α-phase. Accordingly, the low temperature discharge characteristics of the battery 1 can be improved by combining nickel hydroxide of α-phase as the positive electrode active material and Y₂O₃ as the additive into the positive electrode mixture.

When the low temperature discharge characteristics of the cases where 1 part by mass of any one of Y₂O₃, Nb₂O₅, TiO₂, and Yb₂O₃ is added as the positive electrode additive, in other words, Example 2, Comparative Example 4, and Comparative Example 3 are compared, the battery of Example 2 in which Y₂O₃ is added exhibits the highest value of 45.8%. Accordingly, it is found that the battery including Y₂O₃ as the positive electrode additive has a large discharge capacity at the low temperature (-20°C) .

Furthermore, it was found that, when Y₂O₃ was used as the additive, and any one of Nb₂O₅, TiO₂, and Yb₂O₃ was simultaneously added together as the additive to form the positive electrode mixtures (Examples 4 to 6), the high temperature charge characteristics is improved on the average, as compared with the battery including only Y₂O₃ as the additive (Example 2). Accordingly, in the battery in which one of Nb₂O₅, TiO₂, and Yb₂O₃ is added as a further additive in addition to Y₂O₃ as the additive to form the positive electrode mixture prepared, the high temperature charge characteristics is also improved in addition to the low temperature discharge characteristics. Thus, the batteries having the improved battery characteristics can be manufactured.

Furthermore, regarding the added amount of Y₂O₃, the low temperature discharge characteristics is 24.2% for the battery of Example 1 including 0.3 parts by mass, 45.8% for the battery of Example 2 including 1 part by mass, and 48.1% for the battery of Example 3 including 5 parts by mass. The low temperature discharge characteristics of Examples 1 to 3 are higher than those of the batteries of Comparative Examples 3, 4, and 5. The battery of Comparative Example 1 including 0.1 parts by mass of Y₂O₃ exhibits 10.7% of the low temperature discharge characteristics, which is low. On the other hand, the battery of Comparative Example 2 including 6 parts by mass of Y₂O₃ exhibits 47.3% of the low temperature discharge characteristics, which is high. As the battery of Comparative Example 2 is 1.053 times heavier, more than 5% heavier, than the battery of Example 1 in order that the positive electrode mixture filled in the positive electrode core member of the battery of Comparative Example 2 has the same discharge capacity, it is preferable that the added amount of Y₂O₃ is up to 5%. Accordingly, it is preferable that the added amount of Y₂O₃ is within the range of 0.3 parts by mass to 5 parts by mass with respect to 100 parts by mass of nickel hydroxide of α-phase.

In the alkaline secondary battery, the usage of nickel hydroxide of α-phase single phase as the positive electrode active material and the usage of yttrium oxide as the additive for forming the positive electrode result in the improvement of the low temperature discharge characteristics. In other words, sufficient discharge capacity can be obtained in a low temperature environment such as -20°C. The addition of any one of an ytterbium compound, a niobium compound, and a titanium compound as the additive in addition to yttrium oxide would lead to the improvement of the high-temperature charge characteristics.

According to the present disclosure, since the electroconductivity of the positive electrode is improved, the low temperature discharge characteristics of the alkaline battery having the positive electrode can be improved.

In the above-mentioned embodiment, the nickel-metal hydride battery is described as one embodiment of the alkaline secondary battery. However, the present invention is not limited to the nickel-metal hydride battery, but can be applied to the positive electrode of any type of alkaline secondary battery.

## Claims

1. A positive electrode for an alkaline secondary battery, comprising:
a positive electrode active material comprising 100 parts by mass of nickel hydroxide, and
additive comprising yttrium oxide, wherein the nickel hydroxide comprises an α-phase single phase.

2. The positive electrode for the alkaline secondary battery according to claim 1, wherein yttrium oxide is within the range of 0.3 to 5 parts by mass.

3. The positive electrode for the alkaline secondary battery according to claim 1 or 2, wherein the additive further comprises at least one or more of ytterbium compound, niobium compound, and titanium compound.

4. The positive electrode for the alkaline secondary battery according to one of previous claims, further comprising electroconductive layers on surfaces of particles of the nickel hydroxide, the electroconductive layer including cobalt compound.

5. The positive electrode for the alkaline secondary battery according to one of previous claims, further comprising an electroconductive material.

6. An alkaline secondary battery comprising an electrode group accommodated with alkali electrolytic solution in an outer can, the electrode group comprising:
a positive electrode according to one of previous claims, and
a negative electrode comprising a hydrogen storage alloy, the hydrogen storage alloy being able to absorb and release hydrogen electrochemically, the negative electrode being opposed to the positive electrode through a separator.
